# EUROPÄISCHE PATENTSCHRIFT

(11) **EP 3 631 254 B1**
(45) Veröffentlichungstag und Bekanntmachung des Hinweises auf die Patenterteilung: **30.04.2025**
(21) Anmeldenummer: 18728152.2
(22) Anmeldetag: 30.05.2018
(51) Int. Cl.: F16J 15/3228, F16J 15/3252

(54) **DICHTRING**
SEALING RING
BAGUE D'ÉTANCHÉITÉ

(30) Priorität: 02.06.2017 DE 102017005284
(43) Veröffentlichungstag der Anmeldung: 08.04.2020
(73) Patentinhaber: Carl Freudenberg KG, 69469 Weinheim (DE)
(72) Erfinder: PREM, Erich, 69502 Hemsbach (DE); VOGT, Rolf, 68723 Oftersheim (DE); GEISS, Stefan, D-69493 Hirschberg (DE)
(86) Internationale Anmeldenummer: PCT/EP2018/064215
(87) Internationale Veröffentlichungsnummer: WO 2018/220031

(56) Entgegenhaltungen:
- EP-A1- 0 474 950
- DE-A1- 102009 021 892
- DE-A1- 102012 000 184
- GB-A- 2 153 020
- GB-A- 2 272 733
- US-A- 3 717 351

## Beschreibung

Die Erfindung betrifft einen Dichtring, umfassend einen Tragkörper und zumindest einen Dichtkörper.

Bei elektrischen Kleingeräten, beispielsweise bei Haushaltsgeräten, werden zur Abdichtung häufig einfachste Dichtsysteme zum Einsatz gebracht. Hierbei ist eine wesentliche Anforderung, dass diese kostengünstig sein müssen. Dabei werden Dichtelemente häufig direkt in Gehäuseteile der Kleingeräte integriert. Eine Austauschmöglichkeit derartiger Dichtelemente ist nicht vorgesehen. Die Dichtelemente sind darüber hinaus häufig von minderwertiger Qualität, so dass die Dichtwirkung des Dichtsystems nicht über die geplante Nutzungsdauer des Kleingerätes aufrechterhalten werden kann. Ein Einsatz von Dichtelementen wie sie in der Industrie üblich sind, scheidet dabei aufgrund der hohen Materialkosten für Dichtelement und Tragkörper aus.

Aus der GB 2 272 733 A ist ein Dichtring mit einem Tragkörper und einem Dichtkörper bekannt, wobei der Tragkörper mehrteilig ausgebildet ist und ein Gehäuseelement und einen Innenkörper aufweist, wobei der Dichtkörper zwischen dem Gehäuseelement und dem Innenkörper festgelegt ist und wobei der Innenkörper formschlüssig an dem Gehäuseelement gehalten ist.

Der Erfindung liegt die Aufgabe zugrunde, einen Dichtring bereitzustellen, der besonders kostengünstig ist und dabei eine Dichtwirkung über einen langen Gebrauchszeitraum ermöglicht.

Diese Aufgabe wird mit den Merkmalen von Anspruch 1 gelöst. Auf vorteilhafte Ausgestaltungen nehmen die Unteransprüche Bezug.

Zur Lösung der Aufgabe umfasst der Dichtring einen Tragkörper und zumindest einen Dichtkörper, wobei der Tragkörper zumindest ein aus Kunststoff ausgebildetes Gehäuseelement aufweist, wobei das Gehäuseelement einen Radialflansch und einen Axialflansch aufweist und wobei das Gehäuseelement den Dichtkörper aufnimmt.

Der Dichtkörper kann stoffschlüssig an das Gehäuseelement angebunden sein. Ein derartiger Dichtring ist einfach und kostengünstig herstellbar. Durch den Stoffschluss sind der Dichtkörper und das Gehäuseelement verliersicher miteinander verbunden. Dichtkörper und Gehäuseelement können besonders einfach geformt sein. Die stoffschlüssige Verbindung kann über ein Klebemittel hergestellt werden. Vorzugsweise ergibt sich die stoffschlüssige Verbindung durch stellenweises Aufschmelzen des Kunststoffes, beispielsweise durch eine Schweißverbindung. Diese kann beispielsweise mittels Reibschweißen hergestellt sein.

Der Dichtkörper kann formschlüssig an das Gehäuseelement angebunden sein. Bei einer formschlüssigen Verbindung entfallen die Verfahrensschritte die für eine stoffschlüssige Verbindung erforderlich sind. Des Weiteren entfällt eine Vorbehandlung der Fügestellen mit problematischen Stoffen wie es für eine stoffschlüssige Klebeverbindung häufig erforderlich ist.

Der Dichtkörper kann sich entlang der Stirnseite des Radialflansches und zumindest abschnittsweise entlang des Axialflansches des Gehäuseelementes erstrecken. Bei dieser Ausgestaltung fungiert der Dichtkörper als dynamische Abdichtung gegenüber einem abzudichtenden, rotierenden Maschinenelement, beispielsweise einer Welle und als statische Abdichtung gegenüber einem weiteren abzudichtenden Maschinenelement, beispielsweise einem Gehäuse. Dabei kann der Dichtkörper kompressibel ausgebildet sein und dadurch die Klemmwirkung des Dichtringes in dem Gehäuse verstärken. Des Weiteren schirmt der Dichtkörper das Gehäuseelement auf einer Seite des Spaltes zwischen den beiden Maschinenelementen ab.

Der Tragkörper ist erfindungsgemäß mehrteilig ausgebildet und weist einen aus Kunststoff ausgebildeten Innenkörper auf, wobei das Gehäuseelement den Innenkörper und den zwischen Radialflansch und Innenkörper angeordneten Dichtkörper aufnimmt. Bei dieser Ausgestaltung ist der Dichtkörper zwischen dem Innenkörper und dem Gehäuseelement eingeklemmt und dadurch fixiert.

Das Gehäuseelement kann als L-förmiger Ring ausgebildet sein. Der Innenkörper ist vorzugsweise ringförmig ausgebildet und gelangt nach Montage zur Anlage an dem Radialflansch und der der nach innen gerichteten Seite des Axialflansches. Bei dieser Ausgestaltung bildet der Innenkörper einen Klemmkörper.

Dadurch, dass der Tragkörper, bzw. die Komponenten des Tragkörpers aus Kunststoff ausgebildet sind, ist der Tragkörper besonders kostengünstig herstellbar. Dabei ist besonders vorteilhaft, dass der Dichtkörper formschlüssig zwischen Innenkörper und Gehäuseelement gehalten ist. Dadurch ist es nicht erforderlich, das Material von Innenkörper und Gehäuseelement so auszubilden, dass eine stoffschlüssige Anbindung des Dichtkörpers an den Tragkörper möglich ist. Insofern können bei der erfindungsgemäßen Ausgestaltung beispielsweise Dichtkörper aus **PTFE** zum Einsatz gelangen, welche ausschließlich durch Formschluss zwischen dem Innenkörper und dem Gehäuseelement gehalten sind.

Der Tragkörper kann dabei außenumfangsseitig oder entlang einer dem Gehäuse zugeordneten Stirnseite eine statische Dichtung ausbilden. Dabei kann die statische Dichtung bereits direkt durch den Tragkörper oder das Gehäuseelement realisiert sein. Insbesondere durch Wahl eines geeigneten Kunststoffs kann sich eine ausreichende Abdichtung zwischen Tragkörper und Gehäuse ergeben. Alternativ kann dem Gehäuseelement eine statische Dichtung aus abweichendem Material zugeordnet sein. Hierbei ist insbesondere denkbar, mittels Zweikomponentenspritzguss eine statische Dichtung aus thermoplastischem Material anzuformen.

Als Material für den Innenkörper und das Gehäuseelement kommt vorzugsweise ein thermoplastischer Kunststoff zum Einsatz, so dass Innenkörper und Gehäuseelement im Spritzgießverfahren herstellbar sind. Je nach Einsatzzweck ist es hierbei denkbar, das Gehäuseelement und den Innenkörper aus Polyethylen (PE), Polyamid (PA), Polylactid (PLA), Polypropylen (PP), Polycarbonat (PC), Acrylnitril-Butadien-Styrol (ABS), Polymethylmethacrylat (PMMA), Polyethylenterephthalat (PET) oder Polytetrafluorethylen (PTFE) herzustellen. Des Weiteren ist denkbar, Gehäuseelement und Innenkörper aus einem Duromer auszubilden, wobei zusätzlich eine Faserverstärkung vorgesehen sein kann.

Dabei ist insbesondere denkbar, Gehäuseelement und Innenkörper aus voneinander abweichenden Kunststoffen bereitzustellen. Dabei wird der Werkstoff des Gehäuseelementes so gewählt, dass dieser sicher in einer Gehäusebohrung fixierbar ist. Das Material für den Innenkörper kann so gewählt werden, dass sich eine besonders feste Verbindung von Gehäuseelement und Innenkörper ergibt. Des Weiteren kann für das Gehäuseelement auch ein vergleichsweise weicher Kunststoff gewählt werden, der eine besonders gute statische Abdichtung gegenüber dem Gehäuse ermöglicht.

Der Innenkörper kann beispielsweise aus einem elastischen Werkstoff, beispielsweise einem elastomeren Werkstoff ausgebildet sein, so dass der Innenkörper mit elastischer Vorspannung in dem Gehäuseelement gehalten ist. Dadurch ergibt sich eine sichere Verbindung von Innenkörper, Dichtscheibe und Gehäuseelement.

Der Innenkörper ist erfindungsgemäß formschlüssig an dem Gehäuseelement gehalten. Bei dieser Ausgestaltung weist zumindest der Innenumfang des Axialflansches und/oder der Außenumfang des Innenkörpers Formschlusselemente auf. Nach einer vorteilhaften Ausgestaltung weist der Innenumfang des Axialflansches hierzu ringförmige Vertiefungen in Form einer Nut auf und der Innenkörper weist an seinem Umfang ringförmige Erhebungen auf, welche kongruent zu den Vertiefungen ausgebildet sind. Die Erhebungen und Vertiefungen können auch nur segmentweise ausgebildet sein. Nach Montage des Innenkörpers greifen die Erhebungen des Innenkörpers in die Vertiefungen des Axialflansches des Gehäuseelementes ein und fixieren so den Innenkörper formschlüssig und verliersicher in dem Gehäuseelement. Die Erhebungen können trapezförmig und insbesondere sägezahnförmig ausgebildet sein.

Weitere Möglichkeiten der formschlüssigen Verbindung ergeben sich durch eine Schraubverbindung, bei welcher der Innenkörper ein Außengewinde und das Gehäuseelement ein Innengewinde aufweist, und durch einen Bajonett-Verschluss.

Der Innenkörper kann kraftschlüssig an dem Gehäuseelement gehalten sein. Der Kraftschluss kann zusätzlich zu einem Formschluss realisiert werden. Dazu können der Innendurchmesser des Axialflansches ein Untermaß und/oder der Außendurchmesser des Innenkörpers ein Übermaß aufweisen. Dadurch kann der Innenkörper nur mit Kraftaufwand an, beziehungsweise in dem Gehäuseelement montiert werden. Nach Montage ist der Innenkörper kraftschlüssig an dem Gehäuseelement fixiert und klemmt dabei den Dichtkörper zwischen Innenkörper und Gehäuseelement ein. Insofern ist der Dichtkörper verliersicher zwischen Innenkörper und Gehäuseelement gehalten. Zur Erhöhung der Klemmwirkung können die einander berührenden Flächen von Innenkörper und Gehäuseelement aufgeraut sein.

Der Innenkörper kann stoffschlüssig an dem Gehäuseelement gehalten sein. Der Stoffschluss kann zusätzlich zu dem Formschluss und/oder dem Kraftschluss vorgesehen sein. Hierbei ist es denkbar, dass der Innenkörper mittels einer Klebeverbindung oder einer Schweißverbindung an dem Gehäuseelement stoffschlüssig gehalten ist. Durch die stoffschlüssige Verbindung ergibt sich eine besonders feste Verbindung von Innenkörper und Gehäuseelement. Um die stoffschlüssige Verbindung von Innenkörper und Gehäuseelement herzustellen, sind dabei insbesondere die folgenden Verfahren denkbar: Kleben, Heißverstemmen, Heißelementschweißen, Hochfrequenzschweißen, Laserdurchstrahlschweißen, Zirkularschweißen, Rotationsreibschweißen, Ultraschallschweißen, Vibrationsschweißen und Warmgasschweißen. Bei den Schweißverfahren ist insbesondere vorteilhaft, dass diese eine stoffschlüssige Verbindung von Innenkörper und Gehäuseelement ohne Verwendung eines Zuschlagstoffes ermöglichen.

Der Dichtkörper kann als Dichtscheibe ausgebildet sein. Ein derartiger Dichtkörper ist besonders einfach und kostengünstig herstellbar. Es ist beispielsweise denkbar, den Dichtkörper aus einem rohrförmigen Halbzeug kostengünstig herzustellen. Insbesondere wenn der Dichtkörper lediglich als Staubdichtung fungiert und das Eindringen von Verschmutzungen in einen abzudichtenden Raum verhindern soll, ist es zumeist ausreichend den Dichtkörper als Dichtscheibe auszubilden. In diesem Fall kann die Dichtscheibe beispielsweise aus Filz oder ähnlichem textilen Material bestehen. Für einfache Dichtungsaufgaben, bei welchen Fett zurückgehalten werden soll, kann die Dichtscheibe aus elastomerem Material ausgebildet sein.

Nach einer vorteilhaften Ausgestaltung ist der Dichtkörper aus textilem Flächenmaterial ausgebildet. Ein derartiges textiles Flächenmaterial ist beispielsweise ein Vliesstoff in Form einer Bahnenware. Zur Erhöhung der Dichtwirkung kann das textile Flächenmaterial mit einer Imprägnierung aus PTFE versehen sein. Ein derartiges PTFE-Vlies weist eine hervorragende Dichtwirkung gegenüber eindringenden Verschmutzungen und Spritzwasser auf. Darüber hinaus weist ein PTFE-Vlies eine besonders geringe Reibung auf, so dass sich im laufenden Betrieb nur eine geringe Wärmeentwicklung im Bereich des Dichtrings ergibt. Dies ist insbesondere im Zusammenhang mit dem aus Kunststoff bestehenden Tragkörper vorteilhaft. Es ist auch denkbar einen beschichteten Vliesstoff einzusetzen. In einer weiteren Ausgestaltung kann das textile Flächenmaterial elektrisch leitfähig ausgebildet sein. Bei entsprechend leitfähiger Ausrüstung des Tragkörpers ist diese Ausgestaltung beispielsweise dann vorteilhaft, wenn statische Elektrizität abgeleitet werden soll. Sowohl der Tragkörper als auch der Dichtkörper können aus PTFE ausgebildet sein.

Des Weiteren ist denkbar, den Dichtkörper aus Zellstoff, insbesondere Papier auszubilden. Derartige Werkstoffe sind beispielsweise im Zusammenhang mit Flachdichtungen bekannt. Der Dichtkörper kann auch aus organischem Flächenmaterial, beispielsweise Leder oder dergleichen ausgebildet sein.

Sowohl der Tragkörper als auch der Dichtkörper kann Recycling-Material umfassen. Der Tragkörper kann ebenfalls aus nachwachsendem Rohstoff, beispielsweise Karton bestehen. Der Dichtkörper kann beispielsweise aus flächigem elastomerem Material hergestellt sein, welches bei der Produktion höherwertiger Dichtungen anfällt.

Alternativ kann der Dichtkörper einen scheibenförmigen Befestigungsabschnitt und eine elastomere Dichtlippe aufweisen. Dabei kann sowohl der scheibenförmige Befestigungsabschnitt als auch die Dichtlippe aus demselben elastomeren Material bestehen und materialeinheitlich und einstückig ausgebildet sein. Alternativ kann der scheibenförmige Befestigungsabschnitt aus einem anderen Material als die Dichtlippe bestehen, wobei Befestigungsabschnitt und Dichtlippe dann stoffschlüssig miteinander verbunden sind. Die Dichtlippe kann so ausgebildet sein, dass diese unter radialer Vorspannung dichtend an dem abzudichtenden Maschinenelement anliegt. Zur Verstärkung der Dichtwirkung kann eine Ringfeder oder dergleichen vorgesehen sein. Insofern kann der Dichtring auch als Radialwellendichtring ausgebildet sein.

Die Dichtlippe kann auf dem der Welle zugeordneten Abschnitt mit einer Profilierung, beispielsweise einer Drallnut versehen sein.

Der Radialabschnitt des Gehäuseelementes kann auf der dem Innenkörper zugewandten Seite und/oder der Innenkörper kann auf der dem Radialabschnitt zugewandten Seite mit einer Profilierung versehen sein. Die Profilierung kann dabei aus kongruent zueinander ausgebildeten Erhebungen und Vertiefungen bestehen. Durch die Profilierung wird der zwischen Innenkörper und Gehäuseabschnitt angeordnete Dichtkörper abschnittsweise verformt, so dass sich die Klemmwirkung des Dichtkörpers in dem Tragkörper verbessert. Nach einer vorteilhaften Ausgestaltung ergibt sich eine wellenförmige Profilierung, so dass der Dichtkörper in diesem Bereich ebenfalls wellenförmig verformt und zwischen Gehäuseelement und Innenkörper eingeklemmt wird.

Zwischen Innenkörper, Dichtkörper und Gehäuseelement sind erfindungsgemäß Dichtelemente angeordnet. Die zusätzlichen Dichtelemente können dabei beispielsweise in Form von O-Ringen ausgebildet sein. Die Dichtelemente, welche zwischen Innenkörper und Dichtkörper, beziehungsweise zwischen Dichtkörper und Gehäuseelement angeordnet sind, verbessern die Abdichtung des Dichtrings, so dass kein abzudichtendes Medium zwischen die Komponenten des Dichtrings gelangen kann.

Der Dichtkörper kann stoffschlüssig an Innenkörper und/oder Gehäuseelement festgelegt sein. Dies kann mittels einer Klebe- oder Schweißverbindung und zusätzlich zu den zuvor beschriebenen Maßnahmen erfolgen. Durch die stoffschlüssige Anbindung kann die Gefahr einer statischen Leckage zwischen den Komponenten des Dichtrings vermindert werden.

Dem Axialflansch kann außenumfangsseitig eine separate statische Dichtung zugeordnet sein. Dabei kann die statische Dichtung kraftschlüssig auf dem Außenumfang des Gehäuseelementes gehalten sein. Alternativ kann die statische Dichtung auch stoffschlüssig mit dem Gehäuseelement verbunden sein. Die statische Dichtung kann aus einem ringförmigen elastomeren Element bestehen, welches eine geringe Wandstärke aufweist. Alternativ ist es denkbar, die statische Dichtung in Form eines Dichtlacks auszubilden, welcher im Sprühverfahren auf das Gehäuseelement aufgetragen wird.

Dem Dichtring kann ein Gleitlager zugeordnet sein, auf welchem sich die Welle zur Entlastung des Dichtkörpers abstützen kann.

Der erfindungsgemäße Dichtring eignet sich insbesondere für den Einsatz in Elektrokleingeräten. Eine erfindungsgemäße Dichtungsanordnung umfasst ein Elektrokleingerät und einen Dichtring, wobei das Elektrokleingerät ein Gehäuse aufweist, aus welcher eine Welle herausragt und wobei der Dichtring in dem Spalt zwischen Gehäuse und Welle angeordnet ist und in dem Gehäuse fixiert ist. Bei dem Elektrokleingerät kann es sich um ein Haushaltsgerät, beispielsweise um eine Fruchtpresse, einen Mixer, einen Pürierstab oder eine Küchenmaschine handeln. Ferner ist denkbar, dass das Elektrokleingerät ein Elektrowerkzeug ist.

Dem Tragkörper kann ein Adapterring zugeordnet sein. Dieser ist vorzugsweise kraftschlüssig dem Außenumfang des Gehäuseelementes zugeordnet. Durch den Adapterring kann das Gehäuseelement an verschiedene Durchmesser der Aufnahmebohrung des Gehäuses, in welchem der Dichtring montiert werden soll, angepasst werden. Der Adapterring besteht ebenfalls aus Kunststoff. Der Adapterring kann formschlüssig mittels entsprechender Profilierungen, kraftschlüssig und/oder stoffschlüssig mittels einer Klebe- oder Schweißverbindung auf dem Außenumfang des Gehäuseelementes befestigt sein.

Aus dem Gehäuseelement kann auch ein Flansch ausgebildet sein. Der Flansch kann ringförmig ausgebildet sein und radial nach außen von dem Dichtring abstehen. Mittels des Flansches kann der Dichtring an einem Gehäuse fixiert werden. Der Flansch kann Durchbrüche für Befestigungsmittel aufweisen.

Dem Dichtring kann ein Sensor zugeordnet sein. Dabei kann der Sensor zwischen Innenkörper und Gehäuseelement angeordnet sein und dort zusammen mit dem Dichtkörper eingeklemmt sein. Alternativ kann der Sensor auch dem Innenkörper und/oder dem Gehäuseelement zugeordnet sein. Es ist auch denkbar, den Sensor innerhalb des Innenkörpers oder des Gehäuseelementes anzuordnen. Der Sensor kann beispielsweis die Temperatur von Gehäuse oder Wellen, die Drehzahl der Welle oder in den Dichtring eindringendes Medium erfassen.

Einige Ausgestaltungen des erfindungsgemäßen Dichtrings werden nachfolgend anhand der Figuren näher erläutert. Diese zeigen, jeweils schematisch:
- Fig. 1: Dichtringe mit Dichtscheibe im Schnitt;
- Fig. 2: einen Dichtring mit Dichtscheibe im Schnitt;
- Fig. 3: einen Dichtring mit Dichtlippe im Schnitt;
- Fig. 4: einen Dichtring mit Dichtelementen;
- Fig. 5: Dichtringe mit statischer Dichtung;
- Fig. 6: einen Dichtring mit Stoffschluss zwischen Gehäuseelement und Innenkörper;
- Fig. 7: einen Dichtring mit integriertem Gleitlager;
- Fig. 8: einen Dichtring mit Adapterring;
- Fig. 9: einen Dichtring mit stoffschlüssig an dem Tragkörper angebundenen Dichtkörper;
- Fig. 10: einen Dichtring mit formschlüssig eingebundenem Dichtkörper;
- Fig. 11: einen Dichtring mit formschlüssig eingebundenem Dichtkörper;
- Fig. 12: einen Dichtring mit formschlüssig an dem Tragkörper angeordneten Dichtkörper;
- Fig. 13: einen Dichtring dessen Tragkörper ein Gehäuseelement und einen Innenkörper aufweist.

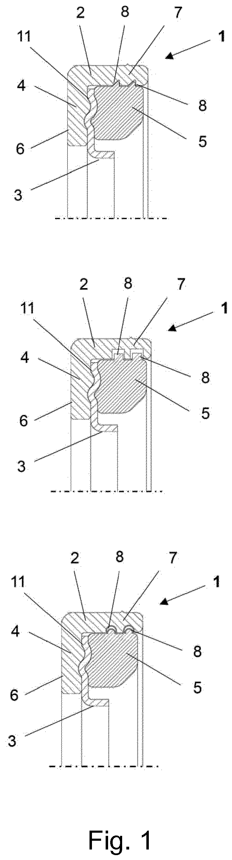

Figur 1 zeigt drei nicht-erfindungsgemäße Ausgestaltungen eines Dichtrings 1, umfassend einen Tragkörper 2 und einen Dichtkörper 3. Der Tragkörper 2 ist mehrteilig ausgebildet und weist ein aus Kunststoff ausgebildetes Gehäuseelement 4 und einen aus Kunststoff ausgebildeten Innenkörper 5 auf. Dabei weist das Gehäuseelement 4 einen Radialflansch 6 und einen Axialflansch 7 auf und das Gehäuseelement 4 nimmt den Innenkörper 5 und den zwischen Radialflansch 6 und Innenkörper 5 angeordneten Dichtkörper 3 auf.

Bei den Ausgestaltungen ist der Innenkörper 5 sowohl kraftschlüssig als auch formschlüssig an dem Gehäuseelement 4 gehalten.

Dazu sind der Axialflansch 7 des Gehäuseelements 4 auf der dem Innenkörper 5 zugewandten Seite und der Innenkörper 5 auf dessen Außenumfang mit Formschlusselementen 8 versehen. Bei der ersten Ausgestaltung weist der Innenkörper 5 dazu ringförmige sägezahnförmige Erhebungen auf, welche in kongruent geformte Vertiefungen eingreifen, die in den Axialflansch 7 eingebracht sind. Bei der zweiten Ausgestaltung weist der Innenkörper 5 rechteckförmige Erhebungen auf, welche in kongruent geformte Vertiefungen eingreifen, die in den Axialflansch 7 eingebracht sind. Bei der dritten Ausgestaltung weist der Innenkörper 5 halbrunde Erhebungen auf, welche in kongruent geformte Vertiefungen eingreifen, die in den Axialflansch 7 eingebracht sind.

Der Radialflansch 6 des Gehäuseelements 4 und der Innenkörper 5 sind an den einander zugewandten Seiten mit einer wellenförmigen Profilierung 11 versehen, so dass der Dichtkörper 3 in diesem Bereich wellenförmig verformt wird.

Bei der Ausgestaltung gemäß Figur 1 ist der Dichtkörper 3 als Dichtscheibe ausgebildet. Die Dichtscheibe ist wiederum aus mit PTFE getränktem Vliesstoff ausgebildet. Insofern ist der Dichtkörper 3 aus textilem Flächenmaterial ausgebildet.

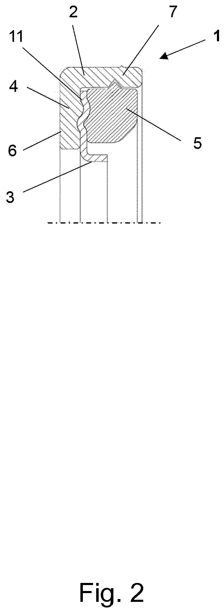

Figur 2 zeigt eine nicht-erfindungsgemäße alternative Ausgestaltung des Dichtrings 1 gemäß Figur 1, bei welchem der Innenkörper 5 über ein Gewinde mit dem Gehäuseelement 4 verbunden ist.

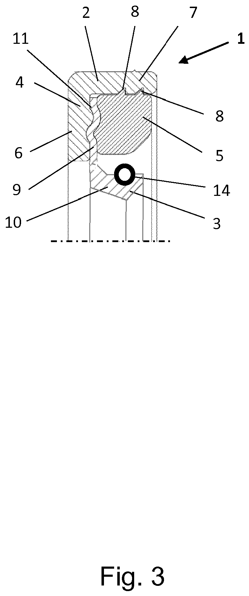

Figur 3 zeigt eine nicht-erfindungsgemäße alternative Ausgestaltung des Dichtrings 1 gemäß Figur 1, bei welchem der Dichtkörper 3 einen scheibenförmigen Befestigungsabschnitt 9 und eine elastomere Dichtlippe 10 aufweist. Der scheibenförmige Abschnitt 9 und die elastomere Dichtlippe 10 bestehen aus voneinander abweichendem Material und sind stoffschlüssig miteinander verbunden. Die Dichtlippe 10 ist mit einer Ringwendelfeder 14 versehen.

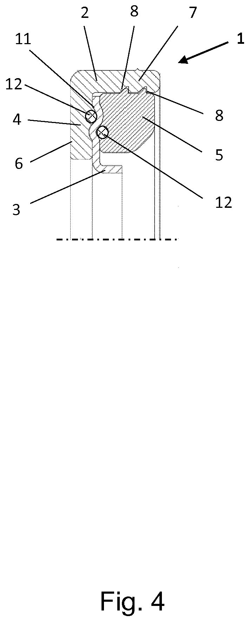

Figur 4 zeigt einen erfindungsgemäßen Dichtring 1 gemäß Figur 1, bei welchem zwischen Innenkörper 5, Dichtkörper 3 und Gehäuseelement 4 Dichtelemente 12 angeordnet sind. Die Dichtelemente 12 sind als O-Ringe geformt.

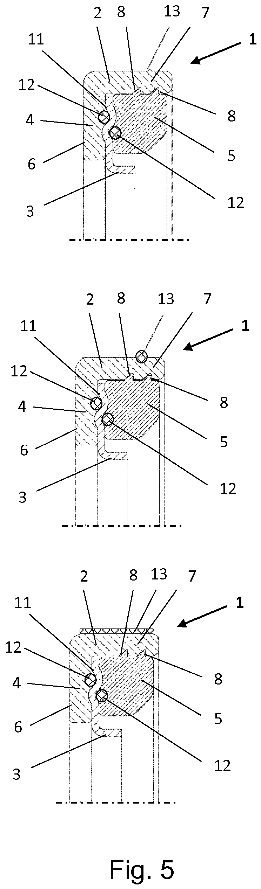

Figur 5 zeigt erfindungsgemäße Dichtringe 1 gemäß Figur 1, welche zusätzlich mit einer statischen Dichtung 13 versehen sind. Bei der ersten Ausgestaltung liegt die statische Dichtung 13 in Form eines Formschlusselementes vor. Bei der zweiten Ausgestaltung liegt die statische Dichtung 13 in Form eines separaten Dichtelementes, hier in Form eines O-Ringes vor. Bei der dritten Ausgestaltung liegt die statische Dichtung 13 in Form eines auf dem Außenumfang des Gehäuseelementes 4 aufgebrachten Dichtlacks vor.

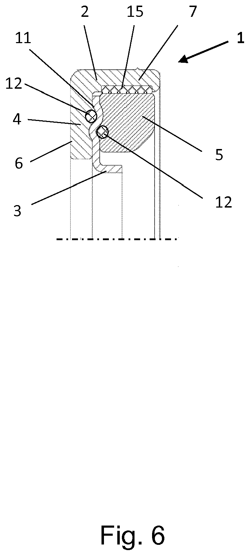

Figur 6 zeigt einen Dichtring 1 gemäß Figur 1, bei welchem der Innenkörper 5 stoffschlüssig an dem Gehäuseelement 4 gehalten ist. Dazu ist der Innenkörper 5 mittels einer Schweißverbindung 15 im Bereich des Axialflansches 7 und des Außenumfangs des Innenkörpers 5 an dem Gehäuseelement 4 angebunden.

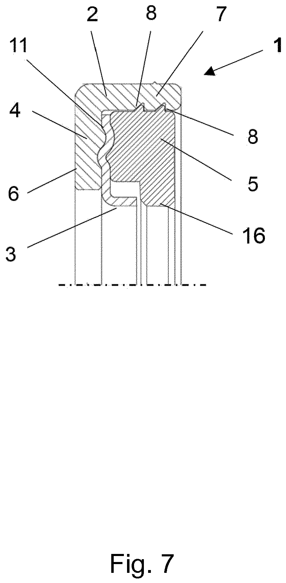

Figur 7 zeigt einen nicht-erfindungsgemäßen Dichtring 1 gemäß Figur 1, wobei aus dem Innenkörper 5 ein Gleitlager 16 in Form eines Gleitrings ausgebildet ist, welches radial nach innen ragt. Das in Figur 7 gezeigte Gleitlager 16 kann grundsätzlich in allen zuvor gezeigten Ausgestaltungen, insbesondere in den Ausgestaltungen gemäß der Figuren 1 bis 5 vorgesehen sein.

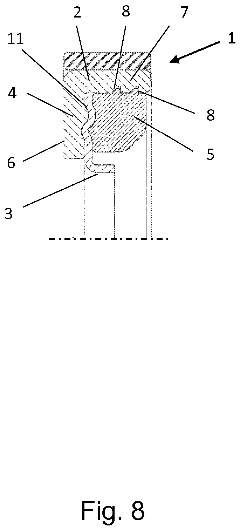

Figur 8 zeigt einen nicht-erfindungsgemäßen Dichtring 1 gemäß Figur 1, bei welchem auf dem Außenumfang des Gehäuseelementes 4 ein Adapterring angeordnet ist. Der Adapterring ist kraftschlüssig auf dem Gehäuseelement 4 gehalten.

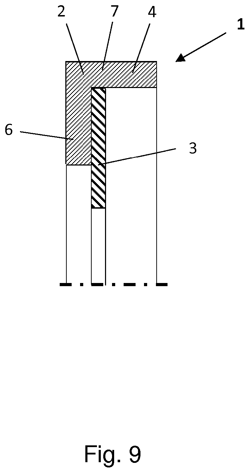

Figur 9 zeigt einen nicht-erfindungsgemäßen Dichtring 1, umfassend einen Tragkörper 2 und einen Dichtkörper 3. Der Tragkörper 2 weist ein aus Kunststoff ausgebildetes Gehäuseelement 4 auf. Dabei weist das Gehäuseelement 4 einen Radialflansch 6 und einen Axialflansch 7 auf. Der Dichtkörper 3 ist auf der dem Axialflansch 7 zugewandten Stirnseite des Radialflansches 6 stoffschlüssig befestigt. Die stoffschlüssige Verbindung ist als Schweißverbindung ausgebildet und wurde mittels Reibschweißen hergestellt.

Gemäß einer alternativen Ausgestaltung ist der Dichtkörper 3 auf der dem Axialflansch 7 abgewandten Stirnseite des Radialflansches 6 stoffschlüssig befestigt und erstreckt sich abschnittsweise über den Axialflansch 7, um dort eine statische Abdichtung zu bilden.

Der Dichtkörper 3 ist als Dichtscheibe ausgebildet. Die Dichtscheibe ist wiederum aus mit PTFE getränktem Vliesstoff ausgebildet. Insofern ist der Dichtkörper 3 aus textilem Flächenmaterial ausgebildet. Der Tragkörper 2 besteht aus spritzgießfähigem Kunststoff.

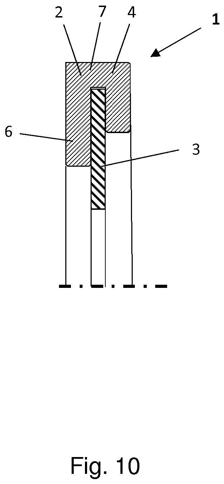

Figur 10 zeigt eine nicht-erfindungsgemäße Weiterbildung des in Figur 9 gezeigten Dichtringes 1. Bei dieser Ausgestaltung wurde der Axialflansch 7 nach Einlegen des Dichtkörpers 3 plastisch verformt, so dass der Dichtkörper 3 an beiden Stirnseiten an das Gehäuseelement 4 angrenzt. Dadurch ist der Dichtkörper 3 formschlüssig in das Gehäuseelement 4 eingebunden. Das plastische Verformen des Gehäuseelementes 4 kann durch kurzzeitiges Erwärmen über den Schmelzpunkt des für das Gehäuseelement 4 verwendeten Kunststoffes hinaus erfolgen.

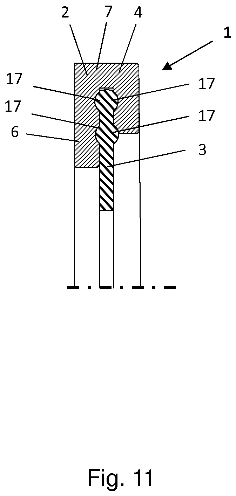

Figur 11 zeigt eine nicht-erfindungsgemäße, alternative Ausgestaltung des in Figur 10 gezeigten Dichtringes 1. Bei dieser Ausgestaltung weist der Dichtkörper 3 an den beiden Stirnseiten Erhebungen 17 auf, welche eine Verbesserung der formschlüssigen Einbindung des Dichtkörpers 3 in das Gehäuseelement 4 bewirken.

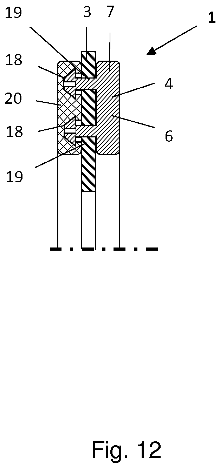

Figur 12 zeigt einen nicht-erfindungsgemäßen Dichtring 1, umfassend einen Tragkörper 2 und einen Dichtkörper 3. Der Tragkörper 2 weist ein aus Kunststoff ausgebildetes Gehäuseelement 4 auf. Dabei weist das Gehäuseelement 4 einen Radialflansch 6 und einen Axialflansch 7 auf. Der Dichtkörper 3 ist auf der dem Axialflansch 7 abgewandten Stirnseite des Radialflansches 6 formschlüssig befestigt. Die formschlüssige Verbindung erfolgt über druckknopfähnliche Vorsprünge 18, welche durch in den Dichtkörper 3 eingebrachte Durchbrechungen 19 hindurchragen, wobei die Vorsprünge 18 in ein Verriegelungselement 20 einrasten.

Bei dieser Ausgestaltung kann sich der Dichtkörper 3 abschnittsweise über den Axialflansch 7 erstrecken, um dort eine statische Abdichtung zu bilden.

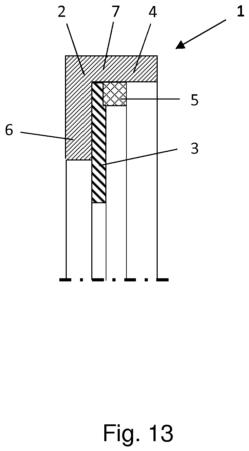

Figur 13 zeigt eine nicht-erfindungsgemäße Ausgestaltung eines Dichtrings 1, umfassend einen Tragkörper 2 und einen Dichtkörper 3. Der Tragkörper 2 ist mehrteilig ausgebildet und weist ein aus Kunststoff ausgebildetes Gehäuseelement 4 und einen aus Kunststoff ausgebildeten Innenkörper 5 auf.

Dabei weist das Gehäuseelement 4 einen Radialflansch 6 und einen Axialflansch 7 auf und das Gehäuseelement 4 nimmt den Innenkörper 5 und den zwischen Radialflansch 6 und Innenkörper 5 angeordneten Dichtkörper 3 auf.

Bei den Ausgestaltungen ist der Innenkörper 5 stoffschlüssig an dem Gehäuseelement 4 gehalten. Die stoffschlüssige Verbindung ist als Schweißverbindung ausgebildet, kann aber auch eine Klebeverbindung sein. Nach Positionieren des Dichtkörpers 3 wird der Innenkörper 5 in das Gehäuseelement 4 eingelegt, beispielsweise mittels Reibschweißen stoffschlüssig an das Gehäuseelement 4 angebunden.

Alternativ ist auch denkbar, dass sich der Innenkörper 5 während des Fügevorgangs verformt und dadurch den Dichtkörper 3 einklemmt.

Der Dichtkörper 3 ist als Dichtscheibe ausgebildet. Die Dichtscheibe ist wiederum aus mit PTFE getränktem Vliesstoff ausgebildet. Insofern ist der Dichtkörper 3 aus textilem Flächenmaterial ausgebildet.

Die in den zuvor beschriebenen Figuren gezeigten Dichtringe 1 eignen sich insbesondere für den Einsatz in Geräten mit Kunststoffgehäusen, beispielsweise in Handgeräten für den Heimwerkerbedarf und Haushaltsgeräten. Der Dichtring 1 eignet sich dabei zur Abdichtung von Wellen, welche aus dem Kunststoffgehäuse herausragen.

Ein vorteilhaftes Gerät umfasst ein Kunststoffgehäuse, in welchem eine Welle gelagert ist, wobei in dem Spalt zwischen Kunststoffgehäuse und Welle ein Dichtring 1 gemäß einer der in den Figuren 1 bis 13 gezeigten Ausgestaltungen ist.

## Patentansprüche

1. Dichtring (1), umfassend einen Tragkörper (2) und zumindest einen Dichtkörper (3), wobei der Tragkörper (2) zumindest ein aus Kunststoff ausgebildetes Gehäuseelement (4) aufweist, wobei das Gehäuseelement (4) einen Radialflansch (6) und einen Axialflansch (7) aufweist und wobei das Gehäuseelement (4) den Dichtkörper (3) aufnimmt, wobei der Tragkörper (2) mehrteilig ausgebildet ist und einen aus Kunststoff ausgebildeten Innenkörper (5) aufweist, wobei das Gehäuseelement (4) den Innenkörper (5) und den zwischen Radialflansch (6) und Innenkörper (5) angeordneten Dichtkörper (3) aufnimmt, wobei der Innenkörper (5) formschlüssig an dem Gehäuseelement (4) gehalten ist, wobei der Axialflansch (7) des Gehäuseelements (4) auf der dem Innenkörper (5) zugewandten Seite mit Formschlusselementen (8) versehen ist, **dadurch gekennzeichnet, dass** zwischen dem Radialflansch (6) des Gehäuseelementes (4) und dem Dichtkörper (3) sowie zwischen dem Dichtkörper (3) und dem Innenkörper (5) Dichtelemente (12) angeordnet sind.

2. Dichtring nach Anspruch 1, **dadurch gekennzeichnet, dass** der Innenkörper (5) kraftschlüssig an dem Gehäuseelement (4) gehalten ist.

3. Dichtring nach einem der Ansprüche 1 bis 2, **dadurch gekennzeichnet, dass** der Innenkörper (5) stoffschlüssig an dem Gehäuseelement (4) gehalten ist.

4. Dichtring nach Anspruch 3, **dadurch gekennzeichnet, dass** der Innenkörper (5) mittels einer Schweißverbindung an dem Gehäuseelement (4) angebunden ist.

5. Dichtring nach einem der Ansprüche 1 bis 4, **dadurch gekennzeichnet, dass** der Dichtkörper (3) als Dichtscheibe ausgebildet ist.

6. Dichtring nach einem der Ansprüche 1 bis 5, **dadurch gekennzeichnet, dass** der Dichtkörper (3) einen scheibenförmigen Befestigungsabschnitt (9) und eine elastomere Dichtlippe (10) aufweist.

7. Dichtring nach einem der Ansprüche 1 bis 6, **dadurch gekennzeichnet, dass** der Dichtkörper (3) aus textilem Flächenmaterial ausgebildet ist.

8. Dichtring nach einem der Ansprüche 1 bis 7, **dadurch gekennzeichnet, dass** dem Axialflansch (7) außenumfangsseitig eine statische Dichtung (13) zugeordnet ist.

## Claims

1. Sealing ring (1) comprising a support body (2) and at least one sealing body (3), wherein the support body (2) has at least one housing element (4) formed from plastic, wherein the housing element (4) has a radial flange (6) and an axial flange (7) and wherein the housing element (4) receives the sealing body (3), wherein the support body (2) is of multi-part design and has an inner body (5) formed from plastic, wherein the housing element (4) receives the inner body (5) and the sealing body (3), which is arranged between the radial flange (6) and the inner body (5), wherein the inner body (5) is held in a form-fitting manner on the housing element (4), wherein the axial flange (7) of the housing element (4) is provided with form-fitting elements (8) on the side facing towards the inner body (5), **characterized in that** sealing elements (12) are arranged between the radial flange (6) of the housing element (4) and the sealing body (3) and between the sealing body (3) and the inner body (5).

2. Sealing ring according to Claim 1, **characterized in that** the inner body (5) is held in a force-fitting manner on the housing element (4).

3. Sealing ring according to one of Claims 1 or 2, **characterized in that** the inner body (5) is held in a cohesively bonded manner on the housing element (4).

4. Sealing ring according to Claim 3, **characterized in that** the inner body (5) is joined to the housing element (4) by means of a welded connection.

5. Sealing ring according to one of Claims 1 to 4, **characterized in that** the sealing body (3) is in the form of a sealing disc.

6. Sealing ring according to one of Claims 1 to 5, **characterized in that** the sealing body (3) has a discshaped fastening portion (9) and an elastomeric sealing lip (10).

7. Sealing ring according to one of Claims 1 to 6, **characterized in that** the sealing body (3) is formed from a textile sheet material.

8. Sealing ring according to one of Claims 1 to 7, **characterized in that** a static seal (13) is assigned to the axial flange (7) on the outer circumference.

## Revendications

1. Bague d'étanchéité (1) comprenant un corps de support (2) et au moins un corps d'étanchéité (3), le corps de support (2) présentant au moins un élément boîtier (4) en matière plastique, l'élément boîtier (4) présentant un pan radial (6) et un pan axial (7), et l'élément boîtier (4) recevant le corps d'étanchéité (3), le corps de support (2) étant constitué de plusieurs parties et présentant un corps intérieur (5) en matière plastique, l'élément boîtier (4) recevant le corps intérieur (5) et le corps d'étanchéité (3) agencé entre le pan radial (6) et le corps intérieur (5), le corps intérieur (5) étant maintenu par complémentarité de forme sur l'élément boîtier (4), le pan axial (7) de l'élément boîtier (4) étant pourvu d'éléments de liaison par complémentarité de formes (8) sur le côté tourné vers le corps intérieur (5), **caractérisée en ce que** des éléments d'étanchéité (12) sont agencés entre le pan radial (6) de l'élément boîtier (4) et le corps d'étanchéité (3) ainsi qu'entre le corps d'étanchéité (3) et le corps intérieur (5).

2. Bague d'étanchéité selon la revendication 1, **caractérisée en ce que** le corps intérieur (5) est maintenu par adhérence sur l'élément boîtier (4).

3. Bague d'étanchéité selon l'une des revendications 1 à 2, **caractérisée en ce que** le corps intérieur (5) est maintenu par liaison de matière sur l'élément boîtier (4).

4. Bague d'étanchéité selon la revendication 3, **caractérisée en ce que** le corps intérieur (5) est relié à l'élément boîtier (4) par une soudure.

5. Bague d'étanchéité selon l'une des revendications 1 à 4, **caractérisée en ce que** le corps d'étanchéité (3) est conçu sous la forme d'un disque d'étanchéité.

6. Bague d'étanchéité selon l'une des revendications 1 à 5, **caractérisée en ce que** le corps d'étanchéité (3) présente une partie de fixation (9) en forme de disque et une lèvre d'étanchéité (10) en élastomère.

7. Bague d'étanchéité selon l'une des revendications 1 à 6, **caractérisée en ce que** le corps d'étanchéité (3) est constitué d'un matériau textile plat.

8. Bague d'étanchéité selon l'une des revendications 1 à 7, **caractérisée en ce qu'**un joint statique (13) est associé au pan axial (7) sur le côté extérieur de la circonférence.
